(19)

**Europäisches Patentamt**
**European Patent Office**
**Office européen des brevets**

(11)　**EP 4 564 167 A1**

(12)　# EUROPEAN PATENT APPLICATION

(43) Date of publication:
**04.06.2025　Bulletin 2025/23**

(21) Application number: **24211084.9**

(22) Date of filing: **06.11.2024**

(51) International Patent Classification (IPC):
**G06F 9/48** *(2006.01)*　　**H02J 3/14** *(2006.01)*

(52) Cooperative Patent Classification (CPC):
**G06F 9/4893; H02J 3/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2023　US 202363604517 P**

(71) Applicant: **General Electric Technology GmbH
5400 Baden (CH)**

(72) Inventors:
- **EVANS, Scott Charles
  Niskayuna, 12309 (US)**
- **SHAH, Tapan Ravin
  Los Altos, 94024 (US)**
- **HUANG, Hao
  Johns Creek, 30022 (US)**
- **ZIMINSKY, Willy Steve
  Greenville, 29615 (US)**
- **WILSON, Brock McLaren
  Atlanta, 30339 (US)**
- **CLAYDON, Ian
  Niskayuna, 12309 (US)**
- **VERNOOY, David William
  Niskayuna, 12309 (US)**
- **ROSE, Blake
  Niskayuna, 12309 (US)**

(74) Representative: **Rüger Abel Patentanwälte
PartGmbB
Webergasse 3
73728 Esslingen a. N. (DE)**

(54)　**REDUCED-ENERGY RANDOM NUMBER GENERATION FOR DYNAMIC GRID STABILIZATION OF A POWER SYSTEM**

(57)　Systems and methods are provided. A method includes obtaining, by one or more computing devices, one or more work instructions associated with a proof-of-work protocol. The method includes performing, by the one or more computing devices, one or more first tasks based at least in part on the work instructions. The method includes determining, by the one or more computing devices and based on one or more values generated by the one or more computing devices during the one or more first tasks, one or more random or pseudorandom values. The method includes performing, by the one or more computing devices and based on the one or more random or pseudorandom values, one or more second tasks different from the one or more first tasks.

*FIG. 1*

EP 4 564 167 A1

## Description

FIELD

The present disclosure relates generally to systems and methods for reducing power usage, reducing carbon emissions and providing grid stabilization for a power system while also maximizing the efficiency of scientific machine learning (SciML), AI, and other computationally intensive endeavors. More particularly, the present disclosure relates to systems and methods for reducing a combined energy cost of two or more computational loads (e.g., computational loads configured to be used as interruptible auxiliary power loads for grid stabilization), wherein a first computational load comprises a proof-of-work task, and a second computational load uses one or more random numbers as input.

BACKGROUND

As industry sectors (e.g., transportation) switch from fossil fuels to electricity, and as power generators use more renewable energy sources like wind and solar power, challenges associated with power loads arise. For example, wind and solar power sources are not always available on-demand. In some cases, a wind power source may be producing no power, and in other cases may be capable of producing more power than is currently needed. To efficiently transition to renewable power sources, it is desirable to become better at predicting power availability, coordinating power use, and being flexible in power consumption to make sure power systems stay stable and reliable.

Growth in renewable energy has also been accompanied by a growth in distributed power generation (e.g., homes with solar panels on their roofs), distributed storage (e.g., home battery systems), and advanced demand response capabilities (e.g., home consumers adjusting an energy use based on supply and price changes). All these elements can in some instances be managed together, making power grids more networked and complex.

One important challenge is energy usage associated with computation, which comprises a significant portion of global energy usage. Example computations that use significant amounts of energy include proof-of-work computations associated with blockchain systems (e.g., Bitcoin mining) and scientific and machine learning computations requiring random numbers as input (e.g., Monte Carlo simulations). Some estimates suggest that the combined energy cost of blockchain computations, artificial intelligence/machine learning, and other scientific computations could grow to 20 percent of all global energy usage by 2030. For example, proof-of-work computations associated with Bitcoin alone - just one of many blockchain systems - use more than an estimated 100 Terawatt-hours of power (TWH) per year globally, with approximately 35 percent of Bitcoin proof-of-work hashes attributable to the United States. *See, e.g.*, S. Shankar, Energy Estimates Across Layers of Computing, https://arxiv.org/ftp/arxiv/papers/2310/2310.07516.pdf. Prior attempts to mitigate energy usage associated with Bitcoin proof-of-work computations have not been successful. For example, some countries have attempted to ban Bitcoin mining altogether, but the primary effect of such bans has been to displace Bitcoin mining to countries without bans, rather than to dramatically reduce the prevalence or energy cost of Bitcoin mining. Some researchers have suggested replacing Bitcoin with a cryptocurrency requiring proof-of-useful-work, rather than merely proof-of-work as required by Bitcoin. However, Bitcoin remains a dominant leader in the cryptocurrency market.

Another major and growing source of computational load is artificial intelligence. With AI already being integrated into search engines like Bing and Bard, more computing power is needed to train and run models. Experts say this could increase the computing power needed-as well as the energy used-by up to five times per search. Moreover, AI models need to be continually retrained to keep up to date with current information.

In many cases, AI and machine-learning computations, computational fluid dynamic simulations and other intense computational operations require using pseudo-random numbers as input. For example, many algorithms for training a machine-learned model are Monte Carlo algorithms, in which an action taken during training is based, at least in part, on a random input value. As another example, many algorithms for training an image generation model require the addition of random noise to a training image. Additionally, algorithms for using a machine-learned model after training sometimes require random values. For example, text generators like ChatGPT and Bard may in some instances use a random number input to select an output randomly from a plurality of choices.

Overall, scientific computation requiring pseudo-random numbers as input (including, e.g., machine learning) use an estimated tens of Terawatt-hours per year globally, and an estimated 10 percent of the energy cost of such computation is attributable to the generation of random numbers used as inputs to those computations. Thus, reducing an energy cost of random number generation could in some instances save more than one Terawatt-hour per year in energy usage, which may translate to more than $100 million in energy cost savings. Reducing an energy usage may also, in some instances, reduce an amount of pollution associated with energy production from certain energy sources.

BRIEF DESCRIPTION

Aspects and advantages of the systems and methods in accordance with the present disclosure will be set forth in part in the following description, or may be obvious from the description, or may be learned through practice of the technology.

In accordance with one embodiment, an example method is provided. The example method includes obtaining one or more work instructions associated with a proof-of-work protocol. The example method includes performing one or more first tasks based at least in part on the work instructions. The example method includes determining, based on one or more values generated by the one or more computing devices during the one or more first tasks, one or more random or pseudorandom values. The example method includes performing, based on the one or more random or pseudorandom values, one or more second tasks different from the one or more first tasks.

In accordance with another embodiment, a computing system is provided. The computing system includes one or more processors and one or more non-transitory computer-readable media storing instructions that are executable by the one or more processors to cause the computing system to perform one or more operations. The operations include obtaining one or more work instructions associated with a proof-of-work protocol. The operations include performing one or more first tasks based at least in part on the work instructions. The operations include determining, based on one or more values generated by the one or more computing devices during the one or more first tasks, one or more random or pseudorandom values. The operations include performing, based on the one or more random or pseudorandom values, one or more second tasks different from the one or more first tasks.

In accordance with another embodiment, one or more non-transitory computer-readable media are provided. The non-transitory computer-readable media store instructions that are executable by one or more computing systems to perform one or more operations. The operations include obtaining one or more work instructions associated with a proof-of-work protocol. The operations include performing one or more first tasks based at least in part on the work instructions. The operations include determining, based on one or more values generated by the one or more computing devices during the one or more first tasks, one or more random or pseudorandom values. The operations include performing, based on the one or more random or pseudorandom values, one or more second tasks different from the one or more first tasks.

These and other features, aspects and advantages of the present methods will become better understood with reference to the following description and appended claims. The accompanying drawings, which are incorporated in and constitute a part of this specification, illustrate embodiments of the technology and, together with the description, serve to explain the principles of the technology.

BRIEF DESCRIPTION OF THE DRAWINGS

A full and enabling disclosure of the present systems and methods, including the best mode of making and using the present systems and methods, directed to one of ordinary skill in the art, is set forth in the specification, which makes reference to the appended figures, in which:

FIG. 1 is a schematic illustration of a computing system in accordance with embodiments of the present disclosure;
FIG. 2 is a schematic illustration of a power grid stabilization system in accordance with embodiments of the present disclosure;
FIG. 3 is a schematic illustration of a computing system in accordance with embodiments of the present disclosure;
FIG. 4 is a chart illustrating an example result according to the present disclosure.
FIG. 5 is a flowchart diagram of a method in accordance with embodiments of the present disclosure.
FIG. 6 is a flowchart diagram of a method in accordance with embodiments of the present disclosure.
FIG. 7 is a flowchart diagram of a method in accordance with embodiments of the present disclosure.

DETAILED DESCRIPTION

Reference now will be made in detail to embodiments of the present systems and methods, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Overview

The present disclosure is generally directed to systems and methods for energy conservation, carbon minimization and grid stabilization in relation to computational energy loads. More particularly, the present disclosure is directed to systems and methods for reducing energy and carbon costs of computational loads (e.g., an auxiliary computational load configured for power grid stabilization, stand alone High Performance Computation center, etc.), wherein a computational load can comprise one or more blockchain proof-of-work computations and one or more computational or simulation tasks (e.g., machine learning, artificial intelligence, or scientific computations) requiring pseudo-random numbers as inputs.

In an exemplary aspect of the present disclosure, one or more auxiliary computational loads can be configured to provide on-demand grid stabilization, wherein excess power (e.g., associated with a power grid; associated with a local system, e.g., a home power generation system; etc.) can be used productively to perform one or more useful computations. For example, one or more computing devices can be operatively connected to a control system associated with one or more power systems. The control system can monitor an amount of available power associated with one or more power sources of the power system. The control system can further monitor a power demand amount associated with one or more power loads of the power system. In some instances, the control system can determine, based on a comparison between the amount of available power and the power demand amount, whether to initiate a computation (e.g., machine learning computation; blockchain proof-of-work computation; etc.).

In some instances, on-demand grid stabilization can include routing a computation to a particular computing system based on power availability data. For example, in some instances a control system can be operatively connected to a plurality of computing systems (e.g., computing devices; data centers; portable modular skids comprising one or more computing devices and configured for grid stabilization; etc.). In such instances, the control system can, for example, obtain a computational load configured to be run immediately. The control system can, for instance, assign the computational load to one or more computing systems (e.g., data centers) of the plurality of computing systems based on a comparison between a plurality of respective amounts of available power associated respectively with the plurality of computing systems (e.g., an amount of available power from a wind farm operatively connected to a data center; etc.). The assignment can also be based on, for example, a comparison between a plurality of respective power demand amounts associated respectively with the plurality of computing systems. The assignment can also be based on, for example, one or more predictions of future demand or future energy availability.

In some instances, the control system can perform adaptive scheduling of a task that is not required to be run immediately. For example, the control system can obtain a computational load comprising a computation that is not required to be run immediately (e.g., can be performed any time in the next day, week, month, etc.). The control system can, for instance, determine whether to initiate the computation immediately based on a comparison between a current amount of available power; a current power demand amount; one or more predicted amounts of future available power; and one or more predicted future power demand amounts. In some instances, the control system can determine whether to pause an already-initiated computation based on such data. In some instances, the control system can determine a particular time to initiate the computation based on one or more power forecasts.

In an exemplary aspect of the present disclosure, a computational load can comprise a computation configured to leverage a computing system (e.g. comprising one or more application-specific integrated circuits (ASICs)) configured for performing a proof-of-work computation (e.g., blockchain proof of work, e.g. Bitcoin) to produce random numbers at a reduced energy cost for use in one or more computations requiring random numbers as input (e.g., machine learning computations; Monte Carlo computations; scientific computations; etc.). For example, in some instances a work instruction associated with a blockchain proof-of-work protocol can be modified to cause a first computing system configured for proof-of-work computations to output a plurality of random or pseudorandom values (e.g., a sequence of cryptographic hash outputs having a random or pseudorandom output distribution) in addition to a proof-of-work output associated with the original work instruction. The plurality of output values can be communicated to a control computing system or a second computing system configured to perform the one or more computations requiring random numbers as input. Based on the output values, the control computing system or the second computing system can generate random or pseudorandom values configured to be used as input in the one or more computations requiring random numbers as input.

Generating a value configured to be used as input can comprise, for example, scaling the value output by the first computing system. For example, an output value can in some instances be associated with a maximum possible output value and a minimum possible output value. In some instances, a computation requiring random numbers as input can be associated with a minimum accepted input value (e.g., 0.0 for some Monte Carlo sampling computations) and a maximum accepted input value (e.g., 1.0). In such instances, a scaled input value can be computed based on the minimum and maximum input and output values. For example, a scaled input value can be equal to:

$$\frac{(\text{randomOutputValue} - \text{minOutputValue})(\text{maxInputValue} - \text{minInputValue})}{(\text{maxOutputValue} - \text{minOutputValue})} + minInputValue$$

In some instances, generating a value configured to be used as input can comprise, for example, a sampling method configured to sample from a probability distribution (e.g., two-dimensional probability distribution) based on a plurality of one-dimensional random inputs. In some instances, generating a value configured to be used as input can comprise rejection sampling. In some instances, generating a value configured to be used as input can comprise Metropolis-Hastings sampling. In some instances, generating a value configured to be used as input can comprise Gibbs sampling.

In some implementations, random numbers generated from proof-of-work values can be leveraged to support multiple computations requiring random numbers as input (e.g., by storing and reusing the random numbers; by operatively connecting a proof-of-work system to two or more randomness-based computation systems; etc.).

In some implementations, an integrated architecture can leverage one or more proof of work mining ASICs combined with one or more GPUs (e.g., combined into one computing system or computing device), or other computational platforms or ASICs to provide a net energy gain in the dual use of compute leveraging these random numbers created at low energy cost.

Systems and methods of the present disclosure have various technical effects and benefits. For example, random number generation methods of the present disclosure use less energy than prior random number generation methods. For example, experiments according to the present disclosure compared an energy cost associated with a blockchain computation and a Monte Carlo computation performed separately to an energy cost of a combined blockchain-Monte Carlo computation using random numbers generated according to the present disclosure. Systems and methods of the present disclosure were associated with a lower combined energy cost under a variety of experimental conditions.

As another example, scheduling methods of the present disclosure can make productive use of spare renewable energy and minimize an amount of carbon emissions associated with a computational load. Systems and methods of the present disclosure can also provide grid stabilization through interruptible "shock absorbers to the grid," which can dissipate waste energy while simultaneously providing useful computational outputs. Additionally, systems and methods of the present disclosure can reduce a climate impact associated with proof-of-work blockchain computations and the growing artificial intelligence and machine learning sector by reducing a combined computational cost associated with blockchain and machine-learning computations.

Prior methods for reducing computational energy costs have generally focused on ways to separately optimize blockchain computations or machine-learning computations to reduce an energy usage or reduce a carbon footprint associated with one computation or the other (rather than both in combination). For example, some researchers have proposed energy aware machine learning, which can optimize machine-learned models to use less energy during inference. Similarly, a Kolmogorov learning cycle can measure how efficiently a machine learns in relation to an amount of energy used (e.g. a ratio between "entropy reduction" and energy used). In the context of blockchain, specialized hardware, such as application-specific integrated circuits (ASICs) for computing cryptographic hashes, has dramatically reduced a per-hash energy cost of computing cryptographic hashes associated with Bitcoin proof-of-work computations. However, few prior works have studied energy usage holistically, in the context of combined computational resources connected to a power grid with a dynamically changing load.

Advantageously, systems and methods of the present disclosure can be used in combination with prior optimization methods while providing additional energy savings and environmental benefits. For example, in some instances, an energy-aware machine-learning algorithm can be Kolmogorov-trained using excess renewable energy and using random numbers generated at a reduced energy cost relative to prior random number generation. In such instances, systems and methods of the present disclosure can be associated with a reduced energy cost compared to prior energy-optimization methods alone.

Example Systems

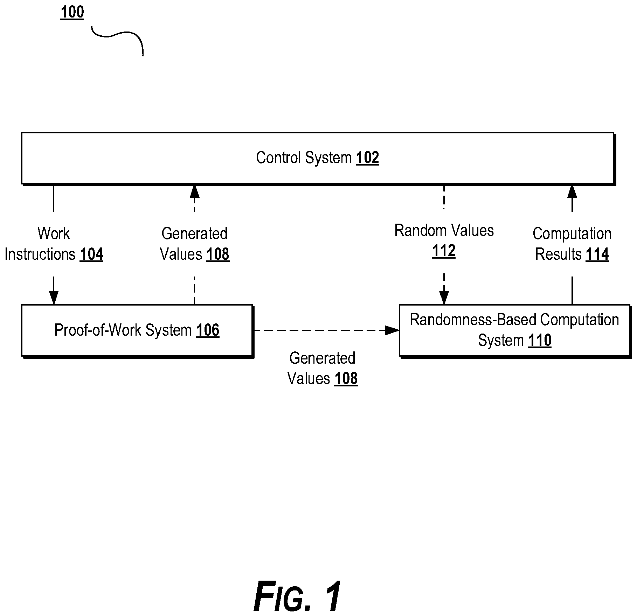

Referring now to the drawings, FIG. 1 illustrates a schematic diagram of one embodiment of a computing system 100. A control system 102 can provide one or more work instructions 104 to a proof-of-work system 106. The proof-of-work system 106 can generate one or more generated values 108 based on the work instructions 104 and communicate them to the control system 102 or a randomness-based computation-system 110. Based on the generated values 108, the control system 102 or the randomness-based computation system 110 can in some instances determine one or more random values 112 configured to be used in a randomness-based computation. The randomness-based computation system 110 can then use the random values 112 to generate one or more computation results 114.

The control system 102 can be or comprise, for example, one or more computing devices or one or more processors (e.g., CPUs, etc.). In some instances, the control system 102 can be or comprise special purpose control hardware configured for controlling one or more application-specific integrated circuits, wherein the application-specific integrated circuits are configured for performing one or more proof-of-work tasks (e.g., cryptographic hash, etc.). In some instances, the control system 102 can comprise one or more proof-of-work control cards (e.g., Antminer S9i, etc.). In some instances, the functionality of the control system 102 may be integrated into the proof-of-work system 106 or the randomness-based computation system 110.

The work instructions 104 can be or comprise, for example, one or more work instructions associated with a proof-of-work protocol (e.g., blockchain proof-of-work protocol). In some instances, the work instructions 104 can be modified work instructions based in part on work instructions associated with a blockchain proof-of-work protocol. For example, in some instances, a blockchain proof-of-work protocol can be associated with a difficulty level, and the rate at which outputs are generated can be inversely proportional to the difficulty level configured by one or more work instructions. In such instances, modifying a work instruction can comprise reducing a difficulty level associated with a blockchain work instruction, such that outputs are received more frequently from the proof-of-work system. The control system 102 can then process the generated values 108 to find the one or more generated values that satisfy the unmodified difficulty level to provide to the blockchain network. In some instances, the work instructions 104 (e.g., modified work instructions) can be configured to cause the proof-of-work system 106 to generate one or more generated values 108 having a random or pseudorandom character. For example, in some instances, the work instructions 104 can be configured to request output of a large number (e.g., thousands per second, etc.) of cryptographic hash values having a random or pseudorandom character.

The proof-of-work system 106 can be or comprise, for example, one or more computing devices comprising one or more processors (e.g., CPUs, GPUs, application-specific integrated circuits, etc.). In some instances, the proof-of-work system 106 can be or comprise one or more application-specific integrated circuits (ASICs) configured for performing a proof-of-work task (e.g., ASICs configured for generating cryptographic hashes, e.g., Antminer Hash Boards; GPUs; etc.). In some instances, the proof-of-work system 106 can be, comprise, implement, be implemented by, be comprised by, be the same as, or be different from the control system 102.

The generated values 108 can comprise, for example, computer-readable data. In some instances, the generated values 108 can comprise computer-readable data having a random or pseudorandom character (e.g., sequences of characters, bits, numbers, etc. satisfying one or more statistical tests of randomness).

The randomness-based computing system 110 can comprise, for example, one or more computing devices configured to perform a computation requiring one or more random values (e.g., random numbers) as input. In some instances, the randomness-based computing system can comprise one or more application-specific integrated circuits (ASICs) configured for performing floating-point operations (e.g. GPUs, ASICs configured for matrix multiplication, etc.).

In some instances, the proof-of-work system 106 can be, comprise, implement, be implemented by, be comprised by, be the same as, or be different from the control system 102 or proof-of-work system 106. For example, in some instances, a single computing system or even a single processor (e.g., CPU) can perform one or more functions of a control system 102, proof-of-work system 106, and a randomness-based computing system 110. It will be appreciated that separate specialized processors (e.g., ASICs) can in some instances perform proof-of-work and randomness-based functions more efficiently than less specialized processors (e.g., CPUs, etc.), but a single-processor system may be appropriate in some cases (e.g., using specialized ASICs configured to perform all three functions, using CPUs with certain ASIC-resistant proof-of-work protocols, etc.) and may in some instances reduce a latency and energy cost associated with communication between processors.

The random values 112 can comprise, for example, computer-readable data configured to be input into a computation requiring random values as input. For example, in some instances, the random values 112 can comprise one or more random or pseudorandom numbers (e.g., uniform random number between 0.0 and 1.0 for a Monte Carlo computation, etc.).

Generating the random values 112 can comprise, for example, obtaining a generated value 108 wherein at least a portion of the generated value 108 is characterized by a random or pseudorandom (e.g., satisfying one or more statistical tests of randomness) character. Generating the random values 112 can further comprise scaling the generated value 108 or random or pseudorandom portion of the generated value 108 to a value configured to be used by the randomness-based computation system 110. For example, in some instances, a generated value 108 may comprise one or more random or pseudorandom ASCII codes encoding text-based data (e.g., 256 ASCII values encoding 256 characters). In such instances, each ASCII code can be characterized by a minimum possible value (e.g., 000, representing a "null" character) and a maximum possible value (e.g., 255, representing a special character resembling a "y" with an "umlaut" over it). In some instances, a randomness-based computation may require an input random variable characterized by a minimum value and a maximum value. For example, some Monte Carlo computations may be based on a random value 112 between 0.0 and 1.0, which can be used to randomly determine an action based on one or more action probabilities. In such instances, a generated value 108 can be scaled to generate a random value 112 according to the following equation:

$$\frac{(\text{generatedValue108} - \text{minGeneratedValue})(\text{maxRandValue} - \text{minRandValue})}{(\text{maxGeneratedValue} - \text{minGeneratedValue})} + minRandValue$$

In some instances, generating one or more random values 112 can comprise more complex sampling processes (e.g., for the purpose of producing a more complex distribution of random values 112, e.g., multi-dimensional distributions associated with a random value for each dimension, etc.). Example sampling processes can include rejection sampling, Metropolis-Hastings sampling, Gibbs sampling, and any other statistical sampling process configured to convert one-dimensional random values into a more complex distribution.

Rejection sampling can comprise determining a first random value associated with a first dimension (e.g. by scaling a generated value 108); determining a second random value associated with a second dimension (e.g. by scaling a generated value 108); comparing the first and second values to a curve describing a probability distribution (e.g., two-dimensional probability distribution) to be sampled from; and accepting the first and second values if a point described by the first and second values falls within the probability distribution. The same process can in some instances apply to probability distributions having more than two (e.g. three, four, etc.) dimensions. In some instances (e.g., for a probability distribution having a large number of dimensions), Metropolis-Hastings sampling or Gibbs sampling can be used instead of or in addition to rejection sampling.

In some instances, random values 112 can be generated based on values other than the generated values 108. For example, compute resources required to perform these operations can in some instances provide an opportunity to create true random number generators based on measurements of the operating system. Measurements such as temperature, pressure, and flow rate taken at discrete locations under operating conditions can in some instances provide multiple random data streams to provide random numbers (e.g., cryptographically secure random numbers). In addition to these easy-to-measure sequences, sequences with higher entropy can be obtained by measuring physical phenomena occurring in each of the computational units (e.g., a motion of gas bubbles within turbulent vortices associated with a cooling system of a computing system 100, etc.). These data streams can be further combined following one or more proofs by Vazirani and Santha to form higher entropy sequences if needed.

The computation results 114 can comprise, for example, computer-readable data generated during a computation requiring random values as input. For example, in some instances, the computation results 114 can comprise one or more results of a machine-learning computation (e.g., a trained machine-learned model or model update as a result of a machine-learning training computation; a machine-learning output as a result of a machine-learning inference computation; etc.) or a scientific computation (e.g., molecular dynamics simulation, etc.).

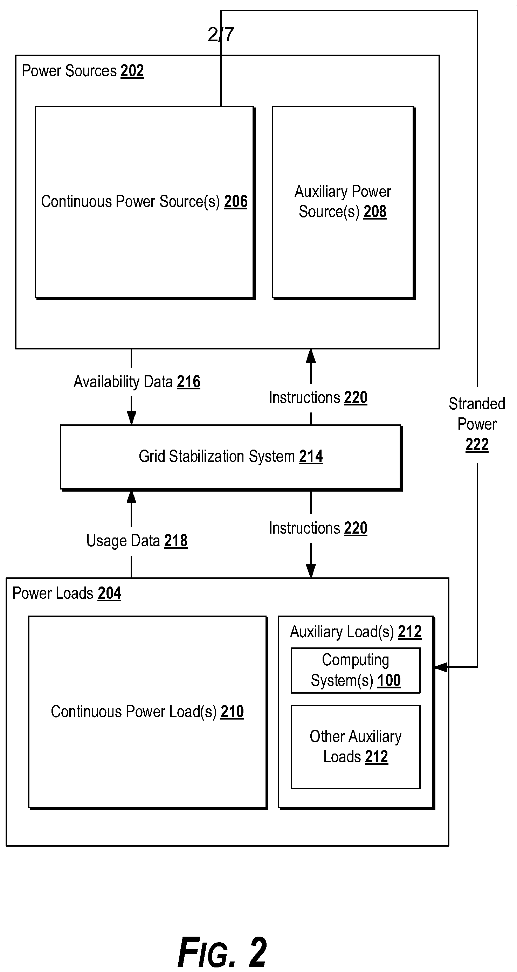

FIG. 2 is a schematic illustration of a power grid stabilization system in accordance with embodiments of the present disclosure. A power grid can comprise power sources 202 and power loads 204. The power sources can comprise continuous sources 206 and auxiliary sources 208, while the power loads can comprise continuous loads 210 and auxiliary loads 212. A grid stabilization system 214 can monitor power availability data 216 and power usage data 218 associated with the power sources 202 and power loads 204 respectively. Based on the data 216, 218, the grid stabilization system 214 can send instructions 220 to the power sources 202 and power loads 204. In one exemplary scenario, the instructions 220 can comprise an instruction to begin operating an auxiliary load 212 (e.g., computing system 100 or other auxiliary load 212) to make productive use of stranded power 222 from the continuous power sources 206.

The power sources 202 can be, for example, any system (e.g., device, machine, apparatus, etc.) capable of generating power (e.g., electricity) and operatively connected to a power system (e.g., public power grid, private power grid, off-grid power system, etc.).

The power loads 204 can be, for example, any system (e.g., device, machine, apparatus, etc.) configured to use power (e.g., electricity) and operatively connected to a power system (e.g., public power grid, private power grid, off-grid power system, etc.).

The continuous power source(s) 206 can comprise, for example, power sources configured to run continuously for a period of time (e.g., hours; days; minutes, etc.). In some instances, the continuous power source(s) 206 can comprise power sources that are capable of being disabled, but may be difficult, inconvenient, or otherwise undesirable to disable. For example, in instances where a continuous power source 206 (e.g., wind turbine; solar panel) can generate power at little or no cost (e.g., financial cost, environmental cost, etc.), it may be undesirable to disable the continuous power source 206 if power from it might otherwise be used productively. In some instances, a continuous power source 206 can comprise a renewable power source (e.g., wind, solar, hydroelectric, geothermal, bioenergy, marine energy, etc.), wherein "renewable" means that the power source derives its energy from a source that is replenishable through natural processes (e.g., plant growth for plant-based fuel, night/day cycle for solar power, etc.). "Renewable" is in contrast to, for example, fossil fuels, which take millions of years to form and are therefore effectively non-replenishable. In some instances, a renewable power source can be a variable renewable power source having an output capacity that varies over time due to changes in an environment of the power source. For example, a wind, solar, or marine power source's output capacity can change due to weather; a hydroelectric or marine energy power source can depend on aquatic conditions (e.g. precipitation, waves, currents, tides, etc.). In another example instance, a continuous power source 206 may take an amount of time (e.g., hours) to reconfigure to output an amount of power different (e.g. larger, smaller, zero) than an amount currently being produced. In some instances, this amount of time may be longer than an amount of time (e.g. minutes, seconds, etc.) associated with one or more changes in power demand or power usage associated with a power system.

The auxiliary power source(s) 208 can comprise, for example, power sources that can be activated, disabled, or adjusted (e.g., configured to output an increased/reduced amount of power) more conveniently (e.g., quickly, cheaply, at reduced environmental cost, etc.) compared to one or more continuous power source(s) 206. In some instances, the auxiliary power source(s) 208 can be configured to be enabled, disabled, or adjusted on demand to adjust a power output in response to a power usage or demand.

Similarly, the continuous power load(s) 210 can comprise, for example, power loads configured to run continuously for a period of time (e.g., hours; days; minutes, etc.). In some instances, the continuous power load(s) 210 can comprise power sources that are capable of being disabled, but may be difficult, inconvenient, or otherwise undesirable to disable. For example, in some instances, the continuous power load(s) 210 may comprise urgent or safety-sensitive power loads (e.g., associated with emergency medical care; heating and cooling; time-sensitive industrial or computing operations; etc.), or loads associated with persons (e.g., power consumers) who may be unable or reluctant to reduce an energy usage in response to changes in power load.

The auxiliary power load(s) 212 can comprise, for example, power loads that can be activated, disabled, or adjusted (e.g., configured to output an increased/reduced amount of power) more conveniently (e.g., quickly, cheaply, at reduced environmental cost, etc.) compared to one or more continuous power load(s) 210. In some instances, the auxiliary power load(s) 212 can be configured to be enabled, disabled, or adjusted on demand to adjust a power output in response to a power usage or demand. Non-limiting examples may include, for example, non-time-sensitive or non-location sensitive computing operations (e.g., machine-learning training operations, which may be conveniently run at off-peak hours); power loads associated with "smart home" systems configured to automatically adjust a power usage in response to changing prices associated with changing demand; etc.

In some instances, the auxiliary power load(s) 212 can comprise networks (e.g., a "grid") of computing devices (e.g., computing systems 100) configured to distribute a computational task across many machines. In such instances, a grid of networked computing devices can be configured to adjust a power load by diverting one or more computing tasks away from one or more computing devices operatively connected to one or more power systems characterized by a power shortage, and toward one or more computing devices operatively connected to one or more power systems characterized by a power surplus (e.g., stranded power 222). In this manner, for instance, an energy cost and a pollution cost associated with one or more computing tasks can be reduced.

The availability data 216 can include, for example, computer-readable data describing one or more amounts of power currently available from one or more power sources 202. This can include, for example, an amount of power currently being produced by one or more continuous power sources 206 and auxiliary power sources 208; a maximum amount of additional power available from auxiliary power sources 208 that are not currently being operated at full capacity; etc. In some instances, the availability data 216 can comprise human-readable data configured to inform a human operator about power usage.

The usage data 218 can include, for example, computer-readable data describing one or more amounts of power currently being used by one or more power loads 204. This can include, for example, an amount of power currently being used by one or more continuous power loads 210 and auxiliary power loads 212; a maximum amount of additional power capable of being used by one or more auxiliary power loads 212 that are not currently being operated at full capacity; a maximum amount of power usage reduction associated with one or more auxiliary loads 212 being run at above-minimum capacity; etc. In some instances, the usage data 218 can comprise human-readable data configured to inform a human operator about power usage.

The instructions 220 can comprise, for example, computer-readable data or human-readable data configured to cause one or more power sources 202 or one or more power loads 204 to change a current behavior (e.g., begin or stop producing power; begin or stop using power; increase or decrease an amount of power being used or produced; etc.). Non-limiting examples can include, for example, a computer-readable instruction configured to cause one or more processors to perform operations to change a current behavior of a power source 202 or power load 204; a consumer alert configured to cause one or more consumers to reduce a power usage; a human-readable instruction configured to cause one or more power plant employees to perform an adjustment; etc. In some instances, the instructions 220 can comprise carbon-minimizing scheduling algorithms or instructions for energy-aware machine learning.

As shown in FIG. 2, stranded power 222 can include, for example, excess power from a continuous power source 206 that is not currently being used by one or more power loads 204. A non-limiting illustrative example can include sustainable power (e.g., being produced by a wind turbine) that is not currently being used, but could be used productively by one or more auxiliary loads 212. Although FIG. 2 depicts a stranded-power scenario in which an auxiliary load is activated in response to a power surplus, a person skilled in the art will recognize that other scenarios are possible (e.g., disabling an auxiliary load 212 or enabling an auxiliary power source 208 in response to a shortage; reducing or increasing a usage rather than enabling or disabling; etc.).

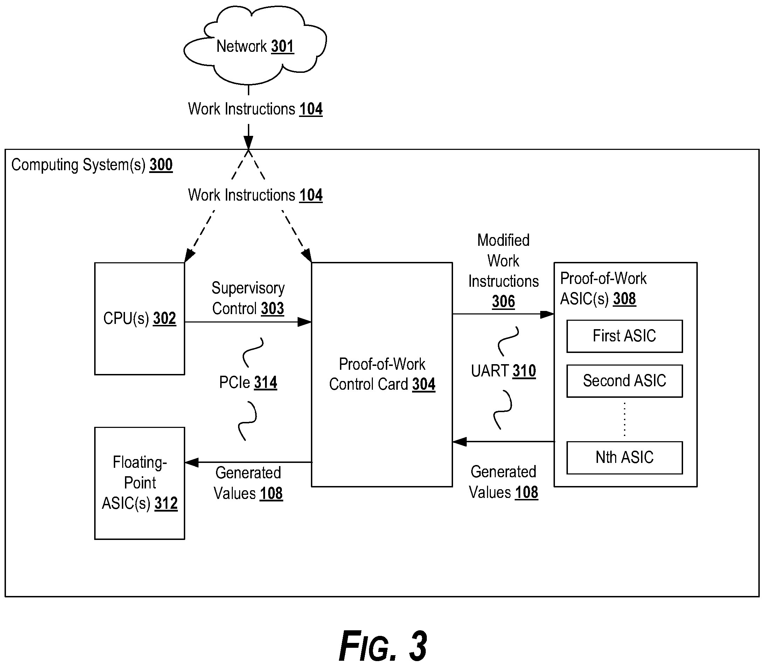

FIG. 3 is a schematic illustration of a computing system 300 in accordance with embodiments of the present disclosure. FIG. 3 depicts the computing system 300 receiving work instructions 104 from a network 301. The work instructions can be sent to one or more CPU(s) 302 or one or more proof-of-work control cards 304. Based on the work instructions 104, the CPU(s) 302 or proof-of-work control cards 304 can generate modified work instructions 306, which can be sent to one or more proof-of-work application-specific integrated circuits (ASICs) 308 via a universal asynchronous receiver-transmitter (UART) 310 or another protocol. The proof-of-work ASICs 308 can then generate generated values 108 and send them to the proof-of-work control card via the UART 310. The proof-of-work control card can then send generated values 108 to, for example, one or more floating-point application-specific integrated circuits 312 via a connection such as PCIe 314. The floating-point ASICs 312 can then use the generated values 108 to perform a computation (e.g., machine learning computation; scientific computation; etc.) requiring random numbers as input.

Although FIG. 3 depicts particular hardware components and particular communications standards, a person skilled in the art will recognize that other hardware components and communication standards can be used without going outside the scope of the present disclosure.

The computing system 300 can comprise, for example, one or more computing devices (e.g., servers; desktops; laptops; cryptocurrency proof-of-work systems; etc.). The computing system 300 can in some instances, be, comprise, or be comprised by a computing system 100.

The network 301, can be or comprise, for example, the Internet or any other network (e.g., LAN, WAN, peer-to-peer network, etc.) configured to transfer computer-readable data between computing devices.

The CPUs 302 can comprise, for example, any hardware configured to operate as a CPU (e.g. a microprocessor, microcontroller, soft-core processor, etc.).

The proof-of-work control card 304 can comprise, for example, any hardware or combination of hardware (e.g., processors, input/output hardware, etc.) configured to exercise control over one or more proof-of-work ASICs by sending one or more instructions to the ASICs and receiving one or more values in return. As a non-limiting example, the proof-of-work control card 304 can in some instances comprise one or more hardware component types associated with one or more Antminer control boards. In some instances, the proof-of-work control card 304 can comprise modified firmware configured to provide modified work instructions 306 to one or more proof-of-work ASICs 308.

It will be appreciated that in some instances, a computing system 300 can control one or more proof-of-work ASICs without using a proof-of-work control card. For example, in some instances, a CPU 302 or a randomness-based computation system 110 can be configured to directly control one or more proof-of-work ASICs 308. This can be achieved, for example, if a CPU 302 and the proof-of-work ASICs 308 have compatible communication interfaces and the CPU 302 is appropriately programmed to control the proof-of-work ASICs 308. In some instances, an adapter card can be used to enable communication between the CPU 302 and the proof-of-work ASICs 308. In some instances, the proof-of-work ASICs 308 or modified work instructions 306 can be configured to cause the proof-of-work ASICs 308 to separately output one or more proof-of-work outputs associated with work instructions 104 (e.g., at blockchain difficulty) and one or more generated values 108 for use in a randomness-based computation.

The modified work instructions 306 can comprise, for example, computer-readable instructions configured to cause one or more proof-of-work ASICs to return one or more generated values 108. For example, in some instances, a work instruction 104 can comprise a difficulty level (e.g., a minimum number of leading zeros of a computed hash of information comprising a cryptographic "nonce" and details from one or more blockchain transactions). In such instances, a high difficulty level may in some instances be associated with a small number of generated outputs (e.g., one output every 15 days with a hash rate of 14.5 tera-hashes/second and 1 in $2^{64}$ odds of a successful hash) having a non-random character (e.g., having a non-random number of leading zeros in each output). In some instances, the modified work instructions 306 can comprise a difficulty level that is lower than a difficulty level of the work instruction 104. In some instances, a modified work instruction 306 can be configured to cause a proof-of-work ASIC 308 to output a larger number (e.g., 3300 per second with a hash rate of 14.5 tera-hashes/second and 1 in $2^{32}$ odds of a successful hash, etc.) of generated values 108 (e.g., cryptographic hash values) characterized by a greater degree of randomness compared to generated values received from work instruction 104. For example, in some instances, a difficulty level of the modified work instructions 306 can be a minimum difficulty level, such that a proof-of-work ASIC 308 outputs a generated value 108 for each operation it performs (e.g., for each cryptographic nonce it computes a hash for). In some instances, the modified work instructions 306 can comprise one or more firmware modifications to the proof-of-work ASICs 308.

The proof-of-work ASICs 308 can comprise, for example, hardware configured to efficiently perform a proof-of-work task (e.g., cryptographic hash, e.g. SHA-256 hash). As a non-limiting illustrative example, the proof-of-work ASICs 308 can comprise one or more hardware component types associated with one or more Antminer proof-of-work ASICs. In some instances, the proof-of-work ASICs 308 can be ASICs configured for use in a combined computational load of the present disclosure, comprising both proof of work and random number generation. For example, in some instances the proof-of-work ASICs 308 can be configured to separately output one or more proof-of-work outputs associated with a work instruction 104 (e.g., at blockchain difficulty) and one or more generated values 108 for use in a randomness-based computation.

The UART 310 can comprise, for example, one or more devices capable of communication using a universal asynchronous receiver-transmitter protocol. A person skilled in the art will appreciate, however, that other hardware types and other communication protocols can be used to perform the communication tasks shown.

The floating-point ASICs 312 can comprise, for example, hardware configured to efficiently perform one or more floating-point operations (e.g., GPU; ASIC configured for matrix multiplication; etc.).

Although FIG. 3 depicts generated values 108 being sent directly to the floating-point ASICs 312 for immediate use, it will be appreciated that the generated values 108 or random values 112 can in some instances be stored for later use using one or more computer-readable storage media (e.g., HBM, RAM, ROM, EPROM, EEPROM, flash memory, magnetic disks, etc.). For example, in some instances a single computing system 300 may store one or more generated values 108 or random values 112 for later retrieval by the computing system 300. In other instances, one or more generated values 108 or random values 112 may be transferred from one computing system to another computing system (e.g., via a network 301), and may in some instances be stored on computer-readable storage media before, during, or after such communication.

The PCIe 314 can comprise, for example, any hardware configured to communicate in accordance with a peripheral component interconnect express standard. A person skilled in the art will appreciate, however, that other hardware types and other communication standards can be used to perform the communications tasks shown.

Example Results

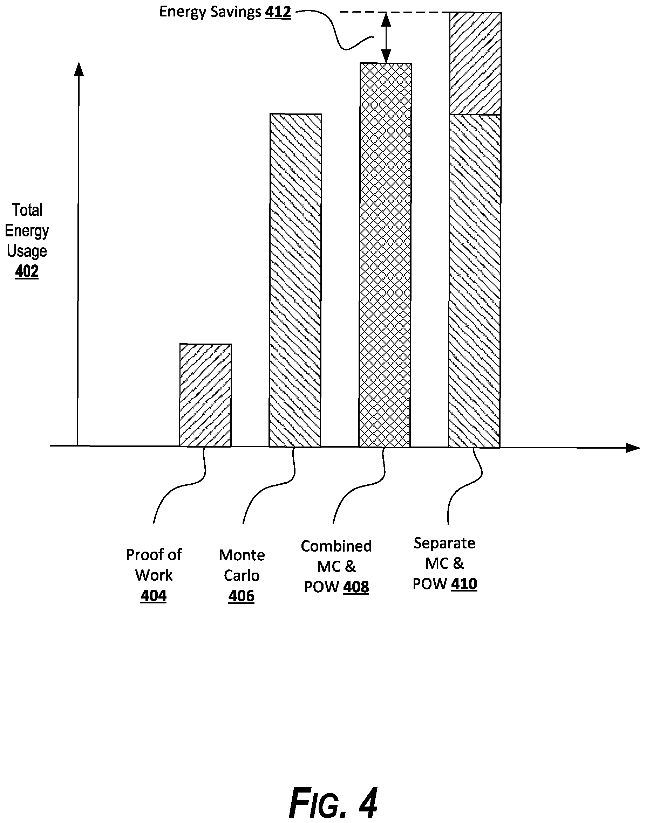

FIG. 4 is a chart illustrating an example result according to the present disclosure. Figure 4 depicts a total energy usage 402 associated with three computations: a proof-of-work computation 404 performed alone; a Monte Carlo computation 406 performed alone; and a combined Monte Carlo and proof-of-work computation 408 in accordance with the present disclosure, wherein random numbers for the Monte Carlo computation were generated based on outputs of the proof-of-work computation according to systems and methods of the present disclosure. A combined energy cost of the computation 408 was compared to a sum 410 of energy costs associated with the separate computations 406, 404, and an energy savings 412 was computed. Experimental results showed a positive energy savings 412 in a variety of experimental conditions. In some instances, the energy savings 412 was equal to about half of the energy usage 402 associated with the proof-of-work computation 404.

Whereas FIG. 4 depicts the energy savings relative to a total cost of the proof-of-work computation and Monte Carlo computation, other example results show a magnitude of energy savings relative to the cost of random number generation itself. For instance, in some example experiments according to the present disclosure, an energy cost of generating a random number in a C programming environment was compared to an energy cost associated with reading a random number from RAM according to systems and methods of the present disclosure. In such instances, reading from RAM resulted in a 90 percent energy savings relative to generating the random number from scratch. Thus, it will be appreciated that systems and methods of the present disclosure improve the functioning of a computing system by enabling similar (e.g., same) tasks to be performed at a reduced energy cost.

<u>Example Methods</u>

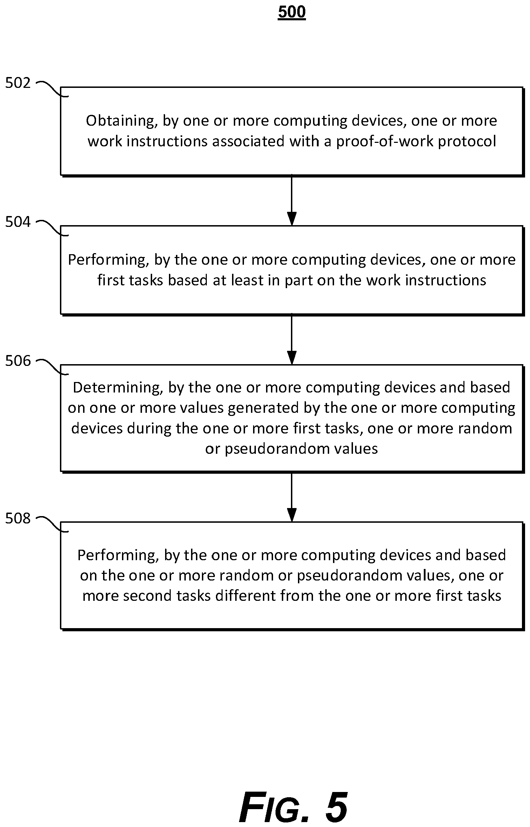

Figure 5 depicts a flowchart diagram of an example method for energy-efficient generation of random numbers according to example embodiments of the present disclosure. Although Figure 5 depicts steps performed in a particular order for purposes of illustration and discussion, the methods of the present disclosure are not limited to the particularly illustrated order or arrangement. The various steps of example method 500 can be omitted, rearranged, combined, and/or adapted in various ways without deviating from the scope of the present disclosure.

At 502, example method 500 can include obtaining, by one or more computing devices, one or more work instructions associated with a proof-of-work protocol. In some instances, the one or more work instructions can be, comprise, or be comprised by work instructions 104 or modified work instructions 306. In some instances, step 502 can include one or more steps described with respect to Figures 1 and 3.

At 504, example method 500 can include performing, by the one or more computing devices, one or more first tasks based at least in part on the work instructions. In some instances, the one or more computing devices can comprise one or more proof-of-work systems 106 or proof-of-work ASICs 308. In some instances, step 504 can include one or more steps described with respect to Figure 1 or 3.

At 506, example method 500 can include determining, by the one or more computing devices and based on one or more values generated by the one or more computing devices during the one or more first tasks, one or more random or pseudorandom values. In some instances, the values generated during the one or more first tasks can be generated values 108. In some instances, the random or pseudorandom values can be, comprise, or be comprised by random values 112. In some instances, step 506 can include one or more steps described with respect to Figure 1 or 3.

At 508, example method 500 can include performing, by the one or more computing devices and based on the one or more random or pseudorandom values, one or more second tasks different from the one or more first tasks. In some instances, the one or more computing systems can comprise one or more randomness-based computation systems 110 or floating-point ASICs 312. In some instances, step 508 can include one or more steps described with respect to Figure 1 or 3.

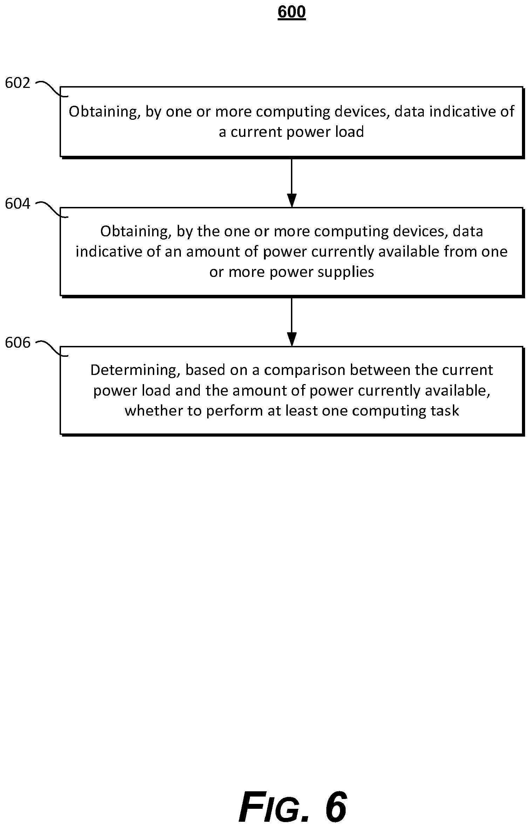

Figure 6 depicts a flowchart diagram of an example method for grid stabilization according to example embodiments of the present disclosure. Although Figure 6 depicts steps performed in a particular order for purposes of illustration and discussion, the methods of the present disclosure are not limited to the particularly illustrated order or arrangement. The various steps of example method 600 can be omitted, rearranged, combined, and/or adapted in various ways without deviating from the scope of the present disclosure.

At 602, example method 600 can include obtaining, by one or more computing devices, data indicative of a current power load. In some instances, the current power load can be, comprise, be comprised by, or be associated with one or more power loads 204. In some instances, the data indicative of the current power load can be, comprise, or be comprised by usage data 218. In some instances, step 602 can include one or more steps described with respect to Figure 2.

At 604, example method 600 can include obtaining, by the one or more computing devices, data indicative of an amount of power currently available from one or more power supplies. In some instances, the one or more power supplies can be, comprise, or be comprised by one or more power sources 202. In some instances, the data indicative of the amount of power currently available can be availability data 216. In some instances, step 604 can include one or more steps described with respect to Figure 2.

At 606, example method 600 can include determining, based on a comparison between the current power load and the amount of power currently available, whether to perform at least one computing task. In some instances, the computing task can be a proof-of-work task or randomness-based computation task associated with a computing system 100, computing system 300, or auxiliary load 212. In some instances, step 606 can include one or more steps described with respect to Figures 1-3.

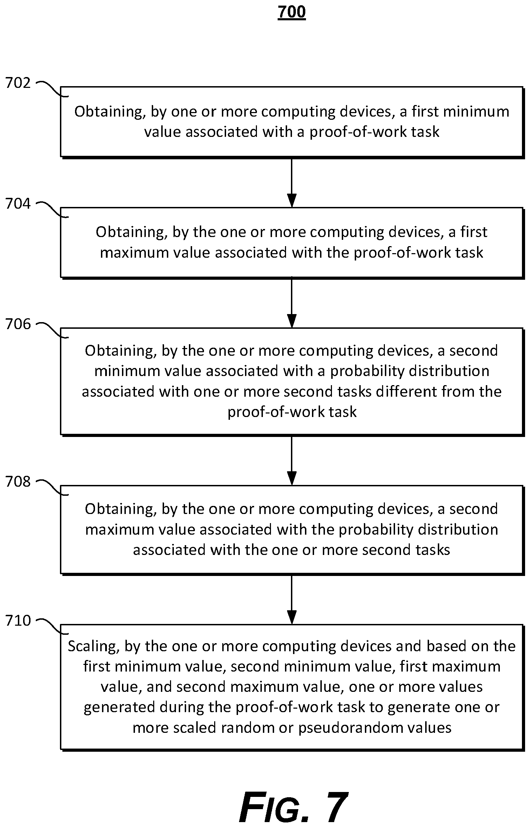

Figure 7 depicts a flowchart diagram of an example method for generating a random value according to example embodiments of the present disclosure. Although Figure 7 depicts steps performed in a particular order for purposes of illustration and discussion, the methods of the present disclosure are not limited to the particularly illustrated order or arrangement. The various steps of example method 700 can be omitted, rearranged, combined, and/or adapted in various ways without deviating from the scope of the present disclosure.

At 702, example method 700 can include obtaining, by one or more computing devices, a first minimum value associated with a proof-of-work task. In some instances, the one or more computing devices can comprise one or more proof-of-work systems 106 or proof-of-work ASICs 308. In some instances, step 702 can include one or more steps described with respect to Figure 1 or 3.

At 704, example method 700 can include obtaining, by the one or more computing devices, a first maximum value associated with the proof-of-work task. In some instances, step 704 can include one or more steps described with respect to Figure 1 or 3.

At 706, example method 700 can include obtaining, by the one or more computing devices, a second minimum value associated with a probability distribution associated with one or more second tasks different from the proof-of-work task. In some instances, the one or more computing devices can comprise one or more randomness-based computation systems 110 or floating-point ASICs 312. In some instances, step 706 can include one or more steps described with respect to Figure 1 or 3.

At 708, example method 700 can include obtaining, by the one or more computing devices, a second maximum value associated with the probability distribution associated with the one or more second tasks. In some instances, step 708 can include one or more steps described with respect to Figure 1 or 3.

At 710, example method 700 can include scaling, by the one or more computing devices and based on the first minimum value, second minimum value, first maximum value, and second maximum value, one or more values generated during the proof-of-work task to generate one or more scaled random or pseudorandom values. In some instances, step 710 can include one or more steps described with respect to Figure 1 or 3.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses:

A computer-implemented method for reducing a combined computation cost of a proof-of-work computation and a computation requiring a source of randomness, comprising: obtaining, by one or more computing devices, one or more work instructions associated with a proof-of-work protocol; performing, by the one or more computing devices, one or more first tasks based at least in part on the work instructions; determining, by the one or more computing devices and based on one or more values generated by the one or more computing devices during the one or more first tasks, one or more random or pseudorandom values; performing, by the one or more computing devices and based on the one or more random or pseudorandom values, one or more second tasks different from the one or more first tasks.

The method of one or more of these clauses, further comprising: obtaining, by the one or more computing devices, data indicative of a current power load; obtaining, by the one or more computing devices, data indicative of an amount of power currently available from one or more power supplies; and determining, based on a comparison between the current power load and the amount of power currently available, whether to perform at least one of the one or more first tasks and one or more second tasks.

The method of one or more of these clauses, wherein the proof-of-work protocol is associated with one or more blockchain networks.

The method of one or more of these clauses, wherein: the work instructions are first work instructions characterized by a first difficulty level, and performing the first task comprises: generating, by the one or more computing devices and based on the work instructions, one or more modified work instructions characterized by a second difficulty level that is lower than the first difficulty level; providing, by the one or more computing devices, the modified work instructions to one or more processors configured to output a number of generated values that is dependent on the difficulty level of the modified work instructions, wherein a lower difficulty level is associated with a higher number of generated values output; receiving, by the one or more computing devices and from the one or more processors, one or more generated values; determining, by the one or more computing devices and based on a comparison between the one or more generated values and the first difficulty level, whether at least one generated value of the one or more generated values has satisfied the first work instructions; and providing the at least one generated value to one or more computing systems associated with the one or more blockchain networks.

The method of one or more of these clauses, wherein determining one or more random or pseudorandom values comprises: obtaining, by the one or more computing devices, a first minimum value associated with the proof-of-work protocol; obtaining, by the one or more computing devices, a first maximum value associated with the proof-of-work protocol; obtaining, by the one or more computing devices, a second minimum value associated with a probability distribution associated with the one or more second tasks; obtaining, by the one or more computing devices, a second maximum value associated with the probability distribution associated with the one or more second tasks; and scaling, by the one or more computing devices and based on the first minimum value, second minimum value, first maximum value, and second maximum value, the one or more values generated by the one or more computing devices during the first task to generate one or more scaled random or pseudorandom values; wherein a probability distribution associated with the scaled random or pseudorandom values corresponds to the probability distribution associated with the one or more second tasks.

The method of one or more of these clauses, wherein determining whether to perform the at least one task comprises: identifying, based at least in part on the comparison between the current power load and the amount of power currently available, an amount of stranded power; and determining an amount of computation to perform based on the amount of stranded power.

The method of one or more of these clauses, wherein the stranded power comprises power generated by at least one renewable power source.

The method of one or more of these clauses, wherein performing the one or more first tasks comprises performing one or more cryptographic hashes.

The method of one or more of these clauses, wherein the one or more cryptographic hashes comprise one or more SHA-256 hashes.

The method of one or more of these clauses, wherein the one or more values generated during the one or more first tasks comprise one or more cryptographic hash values.

The method of one or more of these clauses, wherein the one or more computing devices comprise one or more application-specific integrated circuits configured for generating cryptographic hash values.

The method of one or more of these clauses, wherein the one or more first tasks are performed using the one or more application-specific integrated circuits configured for generating cryptographic hash values.

The method of one or more of these clauses, wherein the one or more second tasks comprise training one or more machine-learned models.

The method of one or more of these clauses, wherein the one or more second tasks comprise performing inference using one or more machine-learned models.

The method of one or more of these clauses, wherein the one or more second tasks comprise image generation.

The method of one or more of these clauses, wherein the one or more second tasks comprise text generation.

The method of one or more of these clauses, wherein the one or more computing devices comprise one or more application-specific integrated circuits configured for performing one or more floating-point operations.

The method of one or more of these clauses, wherein the one or more application-specific integrated circuits configured for performing one or more floating-point operations comprise one or more graphics processing units.

The method of one or more of these clauses, wherein the one or more second tasks are performed using the one or more graphics processing units.

The method of one or more of these clauses, wherein the one or more second tasks comprise Monte Carlo sampling.

The method of one or more of these clauses, wherein the one or more second tasks comprise rejection sampling.

The method of one or more of these clauses, wherein the one or more second tasks comprise Metropolis-Hastings sampling.

The method of one or more of these clauses, wherein the one or more second tasks comprise Gibbs sampling.

The method of one or more of these clauses, further comprising: storing, by the one or more computing devices and using one or more non-transitory computer-readable media, at least one of: the one or more values generated during the one or more first tasks; and the one or more random or pseudorandom values; and retrieving, by the one or more computing devices and from the one or more non-transitory computer-readable media, the values stored; wherein the second tasks are performed using the retrieved values.

The method of one or more of these clauses, further comprising: communicating, from an application-specific integrated circuit associated with the first task and to an application-specific integrated circuit associated with the second task, one or more values; and loading, into one or more random access memories associated with the application-specific integrated circuit associated with the second task, the communicated values; wherein performing the second task comprises accessing the communicated values using the one or more random access memories.

A computing device comprising one or more processors and one or more non-transitory computer-readable media storing instructions that are executable by the one or more processors to cause the computing system to perform one or more operations, the operations comprising: obtaining one or more work instructions associated with a proof-of-work protocol; performing one or more first tasks based at least in part on the work instructions; determining, based on one or more values generated by the one or more computing devices during the one or more first tasks, one or more random or pseudorandom values; performing, based on the one or more random or pseudorandom values, one or more second tasks different from the one or more first tasks.

A computing device comprising one or more processors and one or more non-transitory computer-readable media storing instructions that are executable by the one or more processors to cause the computing system to perform one or more operations, the operations comprising: performing the method of one or more of these clauses.

One or more non-transitory computer-readable media storing instructions that are executable by one or more computing systems to perform one or more operations, the operations comprising: obtaining one or more work instructions associated with a proof-of-work protocol; performing one or more first tasks based at least in part on the work instructions; determining, based on one or more values generated by the one or more computing devices during the one or more first tasks, one or more random or pseudorandom values; performing, based on the one or more random or pseudorandom values, one or more second tasks different from the one or more first tasks.

One or more non-transitory computer-readable media storing instructions that are executable by one or more computing systems to perform one or more operations, the operations comprising: performing the method of one or more of these clauses.

**Claims**

1. A computer-implemented method for reducing a combined computational energy cost of a proof-of-work computation and a computation requiring a source of randomness, comprising:

    obtaining, by one or more computing devices, one or more work instructions associated with a proof-of-work protocol;
    performing, by the one or more computing devices, one or more first tasks based at least in part on the work instructions;
    determining, by the one or more computing devices and based on one or more values generated by the one or more computing devices during the one or more first tasks, one or more random or pseudorandom values;
    performing, by the one or more computing devices and based on the one or more random or pseudorandom values, one or more second tasks different from the one or more first tasks.

2. The method as in claim 1, further comprising:

    obtaining, by the one or more computing devices, data indicative of a current power load;
    obtaining, by the one or more computing devices, data indicative of an amount of power currently available from one or more power supplies; and
    determining, based on a comparison between the current power load and the amount of power currently available, whether to perform at least one of the one or more first tasks and one or more second tasks.

3. The method in claim 1 or 2, wherein the proof-of-work protocol is associated with one or more blockchain networks.

4. The method as in claim 3, wherein:
    the work instructions are first work instructions **characterized by** a first difficulty level, and performing the first task comprises:

    generating, by the one or more computing devices and based on the work instructions, one or more modified work instructions **characterized by** a second difficulty level that is lower than the first difficulty level;
    providing, by the one or more computing devices, the modified work instructions to one or more processors configured to output a number of generated values that is dependent on the difficulty level of the modified work instructions, wherein a lower difficulty level is associated with a higher number of generated values output;
    receiving, by the one or more computing devices and from the one or more processors, one or more generated values;
    determining, by the one or more computing devices and based on a comparison between the one or more generated values and the first difficulty level, whether at least one generated value of the one or more generated values has satisfied the first work instructions; and
    providing the at least one generated value to one or more computing systems associated with the one or more blockchain networks.

5. The method as in claim 1 or 2, wherein determining one or more random or pseudorandom values comprises:

    obtaining, by the one or more computing devices, a first minimum value associated with the proof-of-work protocol;
    obtaining, by the one or more computing devices, a first maximum value associated with the proof-of-work protocol;
    obtaining, by the one or more computing devices, a second minimum value associated with a probability distribution associated with the one or more second tasks;
    obtaining, by the one or more computing devices, a second maximum value associated with the probability distribution associated with the one or more second tasks; and
    scaling, by the one or more computing devices and based on the first minimum value, second minimum value, first maximum value, and second maximum value, the one or more values generated by the one or more computing devices during the first task to generate one or more scaled random or pseudorandom values;
    wherein a probability distribution associated with the scaled random or pseudorandom values corresponds to the probability distribution associated with the one or more second tasks.

6. The method as in claim 2, wherein determining whether to perform the at least one task comprises:

identifying, based at least in part on the comparison between the current power load and the amount of power currently available, an amount of stranded power; and
determining an amount of computation to perform based on the amount of stranded power.

7. The method as in claim 6, wherein the stranded power comprises power generated by at least one renewable power source.

8. The method as in claim 1 or 2, wherein performing the one or more first tasks comprises performing one or more cryptographic hashes.

9. The method as in claim 8, wherein the one or more cryptographic hashes comprise one or more SHA-256 hashes.

10. The method as in claim 1 or 2, wherein the one or more values generated during the one or more first tasks comprise one or more cryptographic hash values.

11. The method as in claim 1 or 2, wherein the one or more computing devices comprise one or more application-specific integrated circuits configured for generating cryptographic hash values, or performing one or more floating-point operations.

12. The method as in claim 11, wherein the one or more first tasks are performed using the one or more application-specific integrated circuits configured for generating cryptographic hash values.

13. The method as in claim 1 or 2, wherein the one or more second tasks comprise at least one of:

training one or more machine-learned models;
performing inference using one or more machine-learned models;
image generation;
text generation;
Monte Carlo sampling;
rejection sampling;
Metropolis-Hastings sampling;
Gibbs sampling.

14. A computing system comprising one or more processors and one or more non-transitory computer-readable media storing instructions that are executable by the one or more processors to cause the computing system to perform one or more operations, the operations comprising:

obtaining one or more work instructions associated with a proof-of-work protocol;
performing one or more first tasks based at least in part on the work instructions;
determining, based on one or more values generated by the one or more computing devices during the one or more first tasks, one or more random or pseudorandom values;
performing, based on the one or more random or pseudorandom values, one or more second tasks different from the one or more first tasks.

15. One or more non-transitory computer-readable media storing instructions that are executable by one or more computing systems to perform one or more operations, the operations comprising:

obtaining one or more work instructions associated with a proof-of-work protocol;
performing one or more first tasks based at least in part on the work instructions;
determining, based on one or more values generated by the one or more computing systems during the one or more first tasks, one or more random or pseudorandom values;
performing, based on the one or more random or pseudorandom values, one or more second tasks different from the one or more first tasks.

**FIG. 1**

**FIG. 2**

FIG. 3

Energy Savings **412**

Total Energy Usage **402**

Proof of Work **404**

Monte Carlo **406**

Combined MC & POW **408**

Separate MC & POW **410**

*FIG. 4*

**500**

502

> Obtaining, by one or more computing devices, one or more work instructions associated with a proof-of-work protocol

504

> Performing, by the one or more computing devices, one or more first tasks based at least in part on the work instructions

506

> Determining, by the one or more computing devices and based on one or more values generated by the one or more computing devices during the one or more first tasks, one or more random or pseudorandom values

508

> Performing, by the one or more computing devices and based on the one or more random or pseudorandom values, one or more second tasks different from the one or more first tasks

*FIG. 5*

**600**

602 — 
Obtaining, by one or more computing devices, data indicative of a current power load

604 — 
Obtaining, by the one or more computing devices, data indicative of an amount of power currently available from one or more power supplies

606 — 
Determining, based on a comparison between the current power load and the amount of power currently available, whether to perform at least one computing task

*FIG. 6*

700

702 — Obtaining, by one or more computing devices, a first minimum value associated with a proof-of-work task

704 — Obtaining, by the one or more computing devices, a first maximum value associated with the proof-of-work task

706 — Obtaining, by the one or more computing devices, a second minimum value associated with a probability distribution associated with one or more second tasks different from the proof-of-work task

708 — Obtaining, by the one or more computing devices, a second maximum value associated with the probability distribution associated with the one or more second tasks

710 — Scaling, by the one or more computing devices and based on the first minimum value, second minimum value, first maximum value, and second maximum value, one or more values generated during the proof-of-work task to generate one or more scaled random or pseudorandom values

# FIG. 7

Europäisches
Patentamt

European
Patent Office

Office européen
des brevets

# EUROPEAN SEARCH REPORT

**Application Number**

EP 24 21 1084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/104132 A1 (UNIV SOUTH FLORIDA [US]) 19 May 2022 (2022-05-19) | 1,3-5, 8-10, 13-15 | INV. G06F9/48 H02J3/14 |
| Y | * claims 1-2 * <br> * paragraph [0005] * <br> * paragraph [0012] * <br> * paragraphs [0025] - [0027] * <br> * paragraph [0030] - paragraph [0033] * <br> ----- | 2,6,7, 11,12 | |
| Y | WO 2023/196212 A1 (NAVIER INC [US]) 12 October 2023 (2023-10-12) <br> * claim 1 * <br> * paragraph [0020] * <br> * paragraphs [0026] - [0027] * <br> * paragraph [0029] * <br> * paragraph [0032] - paragraph [0035] * <br> * paragraph [0040] * <br> * paragraph [0059] * <br> ----- | 2,6,7, 11,12 | |
| A | Anonymous: "Pseudo-Random Number Generator using SHA-256", <br> , <br> 23 June 2021 (2021-06-23), pages 1-2, XP093264058, <br> Retrieved from the Internet: URL:https://web.archive.org/web/2021062308 5404/https://www.stat.berkeley.edu/~stark/ Java/Html/sha256Rand.htm <br> [retrieved on 2025-03-27] <br> * the whole document * <br> ----- | 1-15 | |

**TECHNICAL FIELDS SEARCHED (IPC)**

G06F
H04L

The present search report has been drawn up for all claims

| Place of search | Date of completion of the search | Examiner |
|---|---|---|
| The Hague | 27 March 2025 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1084

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| WO 2022104132 A1 | 19-05-2022 | US 2024007282 A1 | 04-01-2024 |
| | | WO 2022104132 A1 | 19-05-2022 |
| WO 2023196212 A1 | 12-10-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. SHANKAR**. *Energy Estimates Across Layers of Computing*, https://arxiv.org/ftp/arxiv/papers/2310/2310.07516.pdf